# EUROPÄISCHE PATENTSCHRIFT

(11) **EP 1 164 875 B1**
(45) Veröffentlichungstag und Bekanntmachung des Hinweises auf die Patenterteilung: **09.04.2003**
(21) Anmeldenummer: 00922577.2
(22) Anmeldetag: 30.03.2000
(51) Int. Cl.: A23L 1/314, A23L 1/30, A23L 1/221

(54) **VERFAHREN ZUM WÜRZEN VON NAHRUNGSMITTELN**
METHOD OF SEASONING FOOD
PROCEDE D'ASSAISONNEMENT DE PRODUITS ALIMENTAIRES

(30) Priorität: 30.03.1999 DE 19914525; 14.05.1999 DE 19922362; 14.10.1999 DE 19949661
(43) Veröffentlichungstag der Anmeldung: 02.01.2002
(73) Patentinhaber: Drexel, Hans, 86381 Krumbach (DE)
(72) Erfinder: Drexel, Hans, 86381 Krumbach (DE)
(74) Vertreter: Huber, Bernhard, Dipl.-Chem.
(86) Internationale Anmeldenummer: EP0002832
(87) Internationale Veröffentlichungsnummer: WO00059319

(56) Entgegenhaltungen:
- EP-A- 0 103 994
- WO-A-96/38057
- CA-A- 2 116 819
- DE-A- 3 502 983
- US-A- 4 165 391
- US-A- 4 500 559
- US-A- 4 504 496
- US-A- 5 603 976
- US-A- 5 639 495
- ANON.: "Formulating lower-fat and lower-salt processed meats" FOOD ENGINEERING, Bd. 61, Nr. 9, 1989, Seiten 46-48, XP000933683

## Beschreibung

Die Erfindung betrifft eine Gewürzmischung, welche 1 bis 50 Gewichts-% Bierhefeautolysat, bezogen auf das Trockengewicht enthält, weiterhin ein Verfahren zum Würzen von Nahrungsmitteln, insbesondere zur Herstellung oder/und Zubereitung von Fleisch- und Wurstwaren, Käse, Brot, Gemüse, Getränken und Soßen, bei dem man den Bestandteilen bei der Herstellung Hefeautolysat oder die oben genannte Gewürzmischung in üblicher Menge zusetzt.

Heutzutage werden viele Nahrungsmittel unter Zusatz von Gewürzen, Geschmacksstoffen und Geschmacksverstärkern hergestellt und zubereitet. Besonders bei Nahrungsmitteln, die fertig gekauft werden, wie z.B. Fertiggerichten, Fertigsoßen, Wurst- und Fleischwaren, Käse, Brot und Getränken, werden bei der Herstellung meist zusätzlich zu traditionellen Gewürzen auf Pflanzen- und Kräuterbasis Geschmacksverstärker eingesetzt, welche selbst keinen Eigengeschmack haben, sondern die Aufgabe haben, den Geschmack der übrigen Bestandteile hervorzuheben und zu verbessern. Ein klassisches Beispiel ist MSG (Natriumglutamat, E621), welches viel in Fertiggerichten, Suppen- und Soßenkomprimaten, Fleischaromakonzentraten und Konserven verwendet wird. MSG wird als Ursache des Chinarestaurant-Syndroms angesehen, das bei Verbrauch von großen Mengen dieses Geschmacksverstärkers auftreten kann. Dies führte sogar zu einem zeitweiligen Verbot von MSG in einigen Ländern.

EP-A-0 103 994 beschreibt eine Gewürzmischung, die Bierhefeautolysat enthält und in Lebensmitteln verwendet wird. Es ist aus EP-A-0 103 994 bekannt, daß der Bierhefeautolysat den Geschmack der Nahrungsmittel (z.B. Fleischwaren) verbessert, indem die Salzigkeit erhöht wird und die Bitterkeit vermindert wird.

Ferner beschreibt ANON.: 'Formulating lower-fat and lower-salt processed meats' FOOD ENGINEERING, Bd. 61, Nr. 9, 1989, Seiten 46-48, die Verwendung von Hefeautolysat in fettarmen Fleischwaren, die von 18% bis 22% fett enthalten.

Einige Lebensmittel unterliegen strengen Kontrollen, wie z.B. Fleisch- und Wurstwaren. Deutsche Wurst kann als Bestandteile die folgenden Zutaten aufweisen: Fleisch, Speck, Innereien, Salz und Gewürze. Weitere Zutaten werden in der Regel nur für regionale Spezialitäten verwendet.

Als qualitätsbestimmender Bestandteil von Wurstwaren ist ein Mindestgehalt an Fleischeiweiß ohne Bindegewebseiweiß, d.h. Muskelfleisch (Magerfleisch), für fast jede Wurstsorte vorgeschrieben. Er darf überschritten aber nicht unterschritten werden. Reines Muskeleiweiß ist besonders hochwertig, daher bestimmt sein Anteil die Qualität der Wurstware. Qualitätsmindernd wirkt sich stets der mehr oder weniger hohe Fettgehalt von Wurst- und Fleischwaren aus. Allerdings ist es besonders bei der Herstellung von Wurstwaren bisher nicht möglich, ganz ohne Zusatz von Fett oder fetthaltigem Fleisch (z. B. Speck) auszukommen.

Nach der Art der Herstellung und der verwendeten Zutaten unterscheidet man Rohwurstwaren, Brühwurstwaren und Kochwurstwaren. Rohwurstwaren werden aus rohem Material, in der Regel aus rohem Rind- oder Schweinefleisch, kernigem Speck, Salz und Gewürzen hergestellt. Dazu wird das Fleisch entbeint, soweit nötig von Sehnen befreit und in einer speziellen Schneidewanne mit rotierenden Messern (Kutter) zerkleinert, bis die richtige Körnung erreicht ist. Nach dem Zumischen von Salz und Gewürzen wird die Wurstmasse in Hüllen abgefüllt, welche atmungsaktiv, wasser- und dampfdurchlässig sowie elastisch sein müssen, da die Würste im Laufe der Reifung Wasser abgeben und schrumpfen. Die Rohwurstreifung sorgt für die gewünschte Säuerung, Aromabildung, Schnittfestigkeit und Haltbarkeit und wird normalerweise bei 15 bis 22 °C durchgeführt. Rohwurstwaren können auch zusätzlich geräuchert werden. Beispiele für Rohwürste sind Salami, Salsiz, Mettwurst.

Brühwurstwaren werden wie Rohwürste aus roh zerkleinertem Rind- oder Schweinefleisch, Speck sowie Salz und Gewürzen hergestellt. Beim Zerkleinern des Fleisches im Kutter wird feingestoßenes Eis zugefügt. Dieses kühlt die Wurstmasse (Brät) und sorgt für einen homogenen Fleischteig. Rote Brühwurstsorten werden unter Zusatz von Pökelsalz hergestellt, weiße Sorten sowie Bratwürste ausschließlich mit Kochsalz. Brühwürste unterscheiden sich danach, wie fein das Brät gekuttert wurde.

Nach der Abfüllung werden die Wurstwaren zum Teil ebenfalls geräuchert und anschließend gebrüht. Beim Brühen in heißem Wasser oder heißem Wasserdampf gerinnt das Fleischeiweiß und erstarrt. Auf diese Weise wird die Schnittfestigkeit erreicht. Unter Brühwürste fallen u.a. Wiener Würstchen, Bratwurst, Mortadella und Weißwurst.

Kochwurstwaren werden überwiegend aus vorgekochtem oder vorgebrühtem Fleisch, Innereien, Speck und Schwarten hergestellt. Auch rohe Ausgangsmaterialien wie Blut oder Leber können verwendet werden. Nach dem Abfüllen in Wursthüllen werden die Wurstwaren nochmals gekocht, einige Sorten zusätzlich geräuchert. Kochwürste sind im Gegensatz zu Brühwürsten nur im erkalteten Zustand schnittfähig. Man unterteilt die Kochwürste in Leberwürste, Blutwürste und Sülzwürste.

Fleisch- und Wurstwaren werden heute nicht nur aus Rind- und Schweinefleisch hergestellt, sondern auch aus Geflügel.

Weitere Fleischwaren umfassen Pasteten, Rouladen, Klopse, Frikadellen, Fleisch am Stück, z.B. Steak, Schinken, Innereien u.dgl.

Wie bereits erwähnt, wird die beabsichtigte Geschmacksnote von Fleischund Wurstwaren entweder durch Räuchern oder durch Zugabe ausgewählter Gewürze erzielt. Als Gewürze dienen außer dem immer verwendeten Pökeloder Kochsalz häufig Pfeffer, Zwiebeln, Knoblauch sowie andere Gewürze wie z.B. Muskatnuss, Majoran, Koriander, Nelken u.dgl.

Heutzutage ist ein geringer Fettgehalt bei Nahrungsmitteln und besonders bei Wurst- und Fleischwaren, die in Deutschland einen Mindestgehalt an Magerfleisch enthalten müssen, und bei Käse ein wichtiges Kriterium bei der Beurteilung der Qualität. Oft büßen fettarme Nahrungsmittel jedoch durch diesen Umstand an Geschmack ein.

Aufgabe der vorliegenden Erfindung war es daher, Gewürzmittel bereitzustellen, welche für die Herstellung von Nahrungsmitteln mit einer neuen und verbesserten Geschmacksnote geeignet sind, insbesondere für die Herstellung von fettarmen Nahrungsmitteln, sowie ein Verfahren zum Würzen von Nahrungsmitteln.

Diese Aufgabe wird erfindungsgemäß gelöst durch die Bereitstellung einer Gewürzmischung, die sich dadurch auszeichnet, daß sie Bierhefeautolysat in einer Menge von 1 bis 50 Gewichts-%, bezogen auf das Trockengewicht, bevorzugt 1 bis 40 Gewichts-%, stärker bevorzugt 1 bis 20 Gewichts-%, besonders bevorzugt 1 bis 10 Gewichts-% enthält. Weitere Bestandteile der erfindungsgemäßen Gewürzmischungen mit Bierhefeautolysat sind zusätzlich eine oder mehr der folgenden Komponenten: Speisesalz, Gewürze, Gewürzextrakte, Würze, Glucose, Lactose. Es können auch zusätzlich Geschmacksverstärker vorhanden sein, wie z.B. E621. Weiterhin kann in der Gewürzmischung auch Trockenhefe enthalten sein, bevorzugt bis zu 25 %, besonders bevorzugt 10-20 %. Die genannte Gewürzmischung ist für das Würzen von Nahrungsmitteln, insbesondere von Fleisch- und Wurstwaren und für Käse und Teigwaren, wie etwa Brot geeignet, auch zusätzlich zu anderen Gewürzen.

Hefeautolysate werden auf bekannte Art und Weise durch Autolyse von Hefezellen erhalten. Zur Gewinnung eines Autolysats züchtet man Hefe auf einem geeigneten Nährmedium, z.B. Zuckerrübenmolasse, wobei die Hefezellen aufgrund der proteolytischen Aktivität ihrer eigenen Enzyme teilweise autolysieren. Die Produkte werden getrocknet und sind in Pulverform erhältlich. Die Zellwände werden in der Regel nicht entfernt, sodass die autolysierten Hefen zum Teil löslich sind.

Überraschenderweise hat sich gezeigt, dass insbesondere bei der Herstellung bzw. beim Würzen von fettarmen Nahrungsmitteln, insbesondere bei fettarmen Fleischwaren und Käse, Hefeautolysate sich hervorragend eignen, um die durch den geringen Fettgehalt Geschmacksverschlechterung zu vermeiden, besonders gut eignet sich Bierhefeautolysat.

Für die Zwecke der vorligenden Erfindung wird bevorzugt ein Autolysat der Bierhefe (*Saccharomyces cerevisiae*, Bierhefe-Stämme) verwendet, da diese eine besonders positive Auswirkung auf den Geschmack des damit gewürzten Nahrungsmittels hat. Zusätzlich kann auch Milchhefe in der Gewürzmischung enthalten sein.

Überrschenderweise stellte sich heraus, daß der Zusatz von Hefeautolysat zu verschiedenen Lebensmitteln nicht nur den Geschmack verbessert, sondern daß man durch die Zugabe des Hefeautolysats zu Produkten mit geringem Fettgehalt eine Geschmacksqualität erreichen kann, welche normalerweise nur bei einen bestimmten höheren Fettanteil erreicht wird. Bei einigen Nahrungsmitteln wird zudem durch Zugabe der Gewürzmischung der Erfindung ein angenehmer bierartiger Geschmack erreicht.

Unter anderem enthält das für die Gewürzmischung der Erfindung geeignete Bierhefeautolysat natürliche Komponenten, die als Geschmacksverstärker wirken. Darunter ist z.B. die Aminosäure Glutaminsäure, deren Mononatriumsalz den Geschmacksverstärker Natriumglutamat (MSG) darstellt. Auf diese Weise kann den zu würzenden Nahrungsmitteln MSG in natürlicher Form zugegeben werden. Der Vorteil ist hierbei zum einen, daß kein oder nur wenig zusätzliches MSG hinzugegeben werden muß. Zweitens wird ein Gewöhnungseffekt vermieden, da das Bierhefeautolysat zusätzlich zu MSG eine Vielfalt an anderen Geschmacksstoffen enthält.

Ein weiterer Gegenstand der vorliegenden Erfindung ist ein Verfahren zum Würzen von Lebensmitteln, insbesondere von Wurst- und Fleischwaren, Käse, Teigwaren, insbesondere Brot, Keksen, Kräckern u.dgl, Salat- und Fertigsoßen, Essig, Senf, Ketchup, fertig zubereitetem Gemüse, wie etwa Sauerkraut, sowie von Getränken, z.B. alkoholischen Getränken sowie auch Kartoffelchips und verwandten Knabbereien, Knödel, z.B. Semmelknödeln u.dgl., bei dem Hefeautolysat oder die erfindungsgemäße Gewürzmischung in einer üblichen Menge zugesetzt wird.

Hefeautolysat, insbesondere Bierhefeautolysat oder die erfindungsgemäße Gewürzmischung kann bei der Herstellung oder auch nachträglich in Soßen oder als Streugewürz verwendet werden. Besonders gute Ergebnisse lassen sich erzielen, wenn die Gewürzmischung oder das Autolysat während der Herstellung hinzugegeben wird.

Die Gewürzmischung oder das Hefeautolysat können grundsätzlich bei der Käseherstellung eingesetzt werden. Beispielsweise bei der Frischkäseherstellung wird dem Frischkäse oder dem Bruch (z.B. bei Hüttenkäse) das Autolysat oder die Gewürzmischung in einer Menge zugegeben, daß sie einer Menge an Bierhefeautolysat von 0,1 bis 5 g/kg Käsemasse entspricht. Käse kann auch nachträglich durch Einlegen in eine die Gewürzmischung enthaltende Flüssigkeit behandelt werden.

Bei der Brotherstellung wird das Hefeautolysat oder bierhefeautolysathaltige Gewürz bevorzugt zum Teig hinzugegeben. Eine geeignete Menge Hefeautolysat liegt hierbei im Bereich von 0,1 bis 5 g/kg Teig.

Auch Fleisch- und Wurstwaren können durch die erfindungsgemäße Gewürzmischung geschmacklich enorm verbessert werden. Dies zeigt sich vor allem bei magerem Fleisch, anderen fettarmen Fleischwaren und fettarmen Wurstzubereitungen. Im Sinne dieser Erfindung umfasst der Begriff Fleisch alle Arten von Fleisch, z.B. Rind- und Schweinefleisch aber auch Geflügel wie etwa Hühnchen und Pute. Das gleiche gilt für Wurstwaren. Im Sinne dieser Erfindung umfasst der Begriff "Fleischwaren" sowohl Wurstwaren als auch gewürzte Fleischarten/-zubereitungen, wie etwa Schinken, Lachsfleisch, Formfleisch, Frikadellen, Klopse u.dgl.

Das Fleisch kann in unzerkleinertem Zustand mit dem Bierhefegewürz der Erfindung behandelt werden. Dazu wird es bevorzugt über einen gewissen Zeitraum in eine Flüssigkeit eingelegt, in der Hefeautolysat oder die Gewürzmischung gelöst ist. Die Gewürzmischung kann auch zum Pökeln verwendet werden. Das Hefeautolysat ist leicht löslich und eignet sich daher gut zur Herstellung von Marinaden oder Soßen. Es können grundsätzlisch alle Arten von Fleisch behandelt werden, z.B. Steak, Braten, Schinken, Formfleisch, Lachsfleisch. Das Hefeautolysat kann auch in das Fleisch in Form einer Lösung injiziert werden, wenn z.B. lediglich durch Einlegen die gewünschte Geschmacksintensität nicht erreicht wird.

Eine bevorzugte Ausführungsform des erfindungsgemäßen Verfahrens besteht in der Herstellung von Fleischwaren, bei dem man zerkleinertem fettarmem Muskelfleisch, gegebenenfalls anderen genießbaren Teilen von Schlachttieren, Salz und Gewürzen Hefeautolysat, insbesondere Bierhefeautolysat oder die erfindungsgemäße Gewürzmischung mit Bierhefeautolysat in einer üblichen Menge zusetzt. Dabei ist es überraschenderweise nicht erforderlich, zusätzliches Fett bzw. stark fetthaltiges Fleisch (z.B. Speck) hinzuzugeben. Trotz Weglassen des Fettzusatzes ergeben sich keine Nachteile hinsichtlich Gefüge und sensorischen Eigenschaften. Es ist möglich, besonders hochwertiges Fleisch ohne Fett zu verarbeiten.

Es stellte sich überraschenderweise sogar heraus, dass ein Zusatz von Hefeautolysat zu einem Brät für die Wurstherstellung oder zu unzerkleinertem Fleisch dazu führt, dass das fertige Produkt einen verbesserten Geschmack und bei Verwendung von Bierhefeautolysat in bestimmten Nahrungsmitteln ein wohlschmeckendes bierartiges Aroma aufweist. Bevorzugt setzt man den übrigen Zutaten das Hefeautolysat oder die erfindungsgemäße Gewürzmischung in einer Menge zu, die 0,1 bis 5 g Hefeautolysat/kg Fleisch entspricht. Stärker bevorzugt ist ein Zusatz von 0,1 bis 1 g Hefeautolysat/kg. Von der erfindungsgemäßen Gewürzmischung werden dem Brät bevorzugt 5 bis 25 g, stärker bevorzugt 8 bis 20, stärker bevorzugt 8 bis 12 g/kg Fleischmasse zugegeben.

Auf diese Weise ist es durch die vorliegende Erfindung möglich geworden, ein Verfahren zur Herstellung besonders fettarmer Wurst- und Fleischwaren herzustellen, die auch ohne zusätzliches Fett hervorragende Konsistenz- und Geschmackseigenschaften aufweisen.

Das erfindungsgemäße Gewürz trägt zudem durch seinen Vitamin B-Gehalt (Vitamin B₁, B₂, B₆) zur Qualitätsverbesserung der damit gewürzten Nahrungsmittel bei.

Die Zugabe der erfindungsgemäßen Gewürzmischung hat den weiteren Vorteil, daß die Menge an Salz und Bindemitteln (in der Regel Phosphate) verringert werden kann, die normalerweise einer Fleisch-/Wurstmasse beigemischt werden müssen.

Das erfindungsgemäße Verfahren kann für alle drei der oben genannten Wurstwarenkategorien angewendet werden. Es können auch zusätzlich zum Hefeautolysat bekannte Zutaten und Gewürzmischungen eingesetzt werden. Beispiele für weitere Zusätze bei Fleischwaren sind Gemüse wie etwa Paprika, Zwiebeln, Pilze, Senfkörner, Pistazien etc. z.B. zu Aufschnittwurst oder Semmelbrösel zu Frikadellen. Die erforderlichen Mengen können je nach Geschmack leicht ermittelt werden.

Besonders bevorzugt ist die Verwendung von Hefeautolysat bei der Herstellung von Rohwurst- und Brühwurstwaren, bevorzugt fettarme Sorten, wobei das Hefeautolysat der Mischung der Wurstkomponenten zugesetzt wird.

Es ist jedoch auch möglich, das Gewürz mit Bierhefeautolysat mit den sonstigen verwendeten Gewürzzusätzen zu vermischen und dieses resultierende Gemisch dann dem Brät beizumischen.

Durch die Zugabe von Hefeautolysat ist es überraschenderweise zusätzlich möglich, besonders fettarme Fleischwaren und Käse herzustellen, die trotz ihres geringen Fettgehaltes wohlschmeckend sind. Der Fettgehalt läßt sich im Vergleich mit dem normalen Fettgehalt einer Wurst oder sonstiger Fleischware stark verringern, ohne daß der Geschmack leidet. Solche Wurstwaren weisen dann bevorzugt einen Fettgehalt von weniger als 10 %, stärker bevorzugt weniger als 5 % auf. Auch fettarmer Käse mit weniger als 10 % Fett, stärker bevorzugt weniger als 5 % Fett lässt sich so herstellen. So können Fleischwaren im Wesentlichen aus Rindfleisch hergestellt werden, die weniger als 4 % Fett und sogar weniger als 3,5 % aufweisen. Bei Wurst- und Fleischwaren im Wesentlichen aus Schweinefleisch kann sogar ein Fettgehalt von weniger als 3 % und sogar weniger als 2,5 % erzielt werden.

Wenn bei der Herstellung Schüttung, d.h. bis zu 40 %, bevorzugt 20 bis 35 % Eis oder kaltes Wasser hinzugegeben wird, kann der Fettgehalt weiter verringert werden, da das Eis in Form von Wasser in der Fleisch- bzw. Wurstmasse gebunden wird. Es ist jedoch auch möglich und bevorzugt, kein Eis zuzugeben. Der Fettgehalt der erfindungsgemäßen Fleischwaren beträgt somit nicht mehr und bevorzugt sogar weniger als der natürliche Fettgehalt des eingesetzten Fleisches. Bei Einsatz von Schüttung können Fleischwaren insbesondere aus Schweinefleisch hergestellt werden, die weniger als 1 % Fett aufweisen. Somit wird durch einen mit dem Eiweißgehalt qualitativ hochwertiger herkömmlicher Fleischwaren vergleichbarer Eiweißgehalt eine hervorragende Qualität erreicht.

Ein weiterer Gegenstand der Erfindung sind bevorzugt nicht flüssige Nahrungsmittel, welche Hefeautolysat, insbesondere Bierhefeautolysatoder das erfindungsgemäße Gewürz in einer solchen Menge enthalten, die 0,1 bis 5 g Hefeautolysat pro kg Nahrungsmittel entspricht, bevorzugt 0,1 bis 1 g/kg. Solche Nahrungsmittel sind Fleisch- und Wurstwaren, Käse, Teigwaren, Brot und Knabbergebäck, Salat- und Fertigsoßen, Essig, Senf, Ketchup fertig zubereitetes Gemüse, wie etwa Sauerkraut, sowie Getränke, z.B. alkoholische Getränke ausgenommen Bier. Außerdem Knödel und Knabbereien, z.B. Kartoffelchips, Erdnüsse etc. Besonders bevorzugt sind fettarme Nahrungsmittel, insbesondere Käse, Fleisch- und Wurstwaren mit weniger als 10 % Fettgehalt.

Besonders bevorzugt sind Fleisch- und Wurstwaren, die mit der Gewürzmischung der Erfindung gewürzt sind. Noch ein weiterer Gegenstand der Erfindung ist daher eine Wurstware, besonders bevorzugt eine Brüh- oder Rohwurst, die sich durch einen äußerst geringen Fettgehalt auszeichnet. Die erfindungsgemäße Brüh- oder Rohwurst weist lediglich einen Fettanteil von weniger als 10 % auf. Besonders bevorzugt ist eine Rohwurst z.B. eine salamiartige Wurst, oder eine Brühwurst, z.B. Bratwurst oder Aufschnittwurst mit weniger als 5 % Fett, besonders bevorzugt mit 4 % Fett, der bei der Herstellung 5 bis 25 g, besonders bevorzugt 10 bis 14 g, am stärksten bevorzugt 10 bis 12 g der erfindungsgemäßen Gewürzmischung pro kg Brät zugegeben wurden. Eine Menge an Hefeautolysat liegt im Bereich von etwa 0,5 bis 5 g/kg der Fleischbestandteile. Außerdem weist die Wurst bevorzugt einen verringerten Bindemittelgehalt (besonders Phosphate) auf. Darüber hinaus kann die erfindungsgemäße Wurst auch ohne Schüttung hergestellt werden.

Die folgenden Rezepturen sollen die Erfindung beispielhaft erläutern.

### Beispiel 1 Wiener Würstchen mit Bierhefeautolysat

32 kg Rindfleisch der Klasse II, 19 kg Schweinefleisch der Klasse II und 25 kg Speck (Nacken) werden mit Hilfe eines Fleischwolfs (einfacher Satz, 3 mm) zerkleinert, wobei Fleisch und Speck getrennt gewolft werden. Das Fleisch wird mit 20 g Nitritpökelsalz pro Kilogramm Fleisch und Fett und ca. 4 kg Eis zusammen mit Kutterhilfsmitteln bei ca. 6 °C angekuttert (Kuttermesser Größe 6). Anschließend wird der Speck zugegeben und ohne weitere Schüttung zur Homogenität gekuttert. Weitere 20 kg Eis werden zusammen mit Gewürzen und anderen Zutaten (8 bis 12 g Gewürzmischung mit Bierhefeautolysat [enthaltend 3 bis 5 % Bierhefeautolysat sowie die weiteren Bestandteile: Gewürze, Gewürzextrakte, Würze, Speisesalz, Glucose, Lactose, Geschmacksverstärker E621]), 5 g Class-Super 0585 oder Frischmat-P 5527, 1 g Würzomat 5200, 6 g FSB Plus 5105, alle Angaben pro Kilogramm Fleisch und Fett, hinzugegeben und bis zur vollständigen Aufnahme weiterbearbeitet. Anschließend wird die Masse abgefüllt (Saitlinge Kal. 18/20) und pro 60 g abgedreht. Die Weiterbehandlung besteht in Umröten, Räuchern (heiß bei 70 bis 75 °C), Brühen (20 Minuten bei 74 °C) und Abkühlen (warm, dann kalt duschen). Alle Produktbezeichnungen nach Fa. Wiberg Handwerk.

### Beispiel 2 Münchner Weißwurst mit Bierhefeautolysat

8 kg Schwarten werden weichgekocht, unter fließendem Wasser abgekühlt und abgetropft. 24 kg Schweinefleisch der Klasse II, 25 kg Speck und die gekochten Schwarten werden separat gewolft (Wolfeinsatz: doppelter Satz - 2 mm Endscheibe). Das Fleisch wird mit 24 g Kochsalz pro kg Fleisch und 5 g Class-W 0588 pro kg Fleisch 5 Runden trocken laufen gelassen. Anschließend wird mit ca. 4 kg Eis bis 6 °C angekuttert und dann der Speck zugegeben und ohne Schüttung bis ca. 14 °C gearbeitet. Ca. 21 kg Eis und Gewürze, (8 bis 12 g Gewürz mit Bierhefeautolysat (siehe Beispiel 1), 1 g Zitronia 5145, 1 g Würzomat 5200, Angaben pro kg Fleisch und Fett) werden eingearbeitet, und die Temperatur wird auf ca. 0 °C abgesenkt. Nach guter Emulgierung werden die gewolften Schwarten untergemischt und die Masse anschließend in Schweinedärme Kal. 28/30 abgefüllt. Anschließend werden die Würste für 25 Minuten bei 70 °C gebrüht und unter fließendem Wasser abgekühlt.

### Beispiel 3 Lachsfleisch (Formfleisch) mit Bierhefeautolysat

12 kg Schweinfleisch Klasse II werden wie in Beispiel 2 gewolft, Anschließend wird die Masse im Poltergerät mit 8 bis 12 g/kg Fleisch der Gewürzmischung aus Beispiel 1 plus 0,5 g COLORED Nr. 0516, 0,5 g Knoblauch flüssig Nr. 0521, 30 g Nitritpökelsalz, 0,5 g Biobak Ultra Plus Nr. 6874, (Angaben pro kg Fleisch und Fett) ca. 30 Minuten massiert. Dann wird die Masse abgefüllt und unter den folgenden Bedingungen gereift: 2 Stunden Trocknen bei 20 °C, 6 Stunden Trocknen bei 26 °C, 20 Stunden Umröten bei 26 °C (Feuchte 90 %), 20 Stunden Umröten bei 24 °C (Feuchte 88 %), 20 Stunden Umröten bei 24 °C (Feuchte 85 %). Anschließend wird bei ca. 22 °C geräuchert.

### Beispiel 4 Ochsenwurst mit Bierhefeautolysat

7 kg Ochsenfleisch und 3 kg Schweinebug werden gewolft (Wolfeinsatz: doppelter Satz mit 2 mm Endscheibe) und mit einer Gewürzmischung (10-20 g Gewürz mit Bierhefeautolysat aus Beispiel 1, 25 Nitritpökelsalz, 1 g Würzomat, 5 g Frischomat P, Angaben pro Kilogramm Fleisch und Fett) vermengt und durch eine 2 mm Scheibe gewolft. Anschließend wird wiederum leicht durchgemengt und in Saitlinge Kal. 18 - 20 bis 22 - 22 gefüllt. Danach wird wie oben beschrieben geräuchert und bei 72 °C für 20 Minuten gebrüht.

### Beispiel 5 Hot Dog aus Schweinefleisch

Güteklasse I, ohne Fett und Sehnen, Zugabe von Eis
Analyse: 1,2 % analytisches Fett
10 kg Schweinefleisch I und 2,5 kg Eis durch den Fleischwolf lassen. Das Fleisch wird im Kutter zerkleinert unter Zugabe von Kutterhilfsmittel, Nitritpökelsalz und Gewürzmischung mit Bierhefeautolysat. In Därme, Kaliber 26-28 gefüllt. Danach etwa 10 Minuten Feuchtigkeit dazugeben, 20 Minuten trocknen und 20 Minuten räuchern, 17 Minuten kochen bei 74 °C, abkühlen.

### Beispiel 6 Wiener Würstchen aus Schweinefleisch

Güteklasse I, ohne Fett und Sehnen, Zugabe von Eis
Analyse: 1,2 % analytisches Fett
10 kg Schweinefleisch I und 2,5 kg Eis durch den Fleischwolf lassen. Das Fleisch wird im Kutter zerkleinert unter Zugabe von Kutterhilfsmittel, Nitritpökelsalz und Gewürzmischung mit Bierhefeautolysat. In Saitlinge, Kaliber 18-20 oder 20-22 gefüllt. Danach etwa 10 Minuten Feuchtigkeit dazugegeben, 20 Minuten trocknen und 20 Minuten räuchern, 17 Minuten kochen bei 74 °C, abkühlen.

Die Fleischmasse von Beispiel 5 und 6 kann auch für Aufschnittwurst verwendet werden. Dazu werden der Masse für Aufschnittwurst übliche Zutaten (z.B. Paprika- und Pilzstückchen) hinzugegeben. Der Fettgehalt beträgt dann < 1 % analytisches Fett.

### Beispiel 7 Frikadelle aus Schweinefleisch

Güteklasse I, ohne Fett und Sehnen, ohne Zugabe von Eis
Analyse: 2,1 % analytisches Fett
10 kg Schweinefleisch I werden mit einer Gewürzmischung (20 g Kochsalz, 1 g Würzomat, 10-12 g Gewürz mit Bierhefeautolysat) pro kg Fleisch vermengt und durch eine 2 mm Scheibe gewolft. Anschließend leicht durchmengen, mit feingehackten Zwiebeln und Gurken durchmengen und formen, rausbacken.

### Beispiel 8 Hamburger aus Schweinefleisch

Güteklasse I, ohne Fett und Sehnen, ohne Zugabe von Eis
Analyse: 2,1 % analytisches Fett
10 kg Schweinefleisch I werden mit einer Gewürzmischung (20 g Kochsalz, 1 g Würzomat, 10-12 g Gewürz mit Bierhefeautolysat) pro kg Fleisch vermengt und durch eine 2 mm Scheibe gewolft. Anschließend leicht durchmengen, mit feingehackten Zwiebeln und Gurken durchmengen und in formen, rausbacken.

### Beispiel 9 Wurst mit Rindfleisch

Güteklasse I, ohne Fett und Sehnen, ohne Zugabe von Eis
Analyse: 3,5 % bis 4 % analytisches Fett
10 kg Rindfleisch I werden mit einer Gewürzmischung (20 g Nitritpökelsalz, 1 g Würzomat, 2 g Frischomat, 10 bis 12 g Gewürz mit Bierhefeautolysat) pro kg Fleisch vermengt und durch eine 2 mm Scheibe gewolft. Anschließend leicht durchgemengt und in Saitlinge, Kaliber 18-20 oder 20-22 gefüllt. Danach etwa 10 Minuten Feuchtigkeit dazugeben, 20 Minuten trocknen und 20 Minuten räuchern, 17 Minuten kochen bei 74 °C, abkühlen.

### Beispiel 10 Wurst mit Schweinefleisch

Güteklasse I, ohne Fett und Sehnen, ohne Zugabe von Eis
Analyse: 2,1 % analytisches Fett
10 kg Schweinefleisch I werden mit einer Gewürzmischung (20 g Nitritpökelsalz, g Würzomat, 2 g Frischomat, 10-12 g Gewürz mit Bierhefeautolysat) pro kg Fleisch vermengt und durch eine 2 mm Scheibe gewolft. Anschließend leicht durchgemengt und in Saitlinge, Kaliber 18-20 oder 20-22 gefüllt. Danach etwa 10 Minuten Feuchtigkeit dazugeben, 20 Minuten trocknen und 20 Minuten räuchern. 17 Minuten kochen bei 74 °C, abkühlen.

### Beispiel 11 Wurst mit Putenfleisch

Güteklasse I, ohne Fett und Sehnen, ohne Zugabe von Eis
Analyse: 2 - 3 % analytisches Fett
10 kg Putenfleisch I werden mit einer Gewürzmischung (20 g Nitritpökelsalz, 1 g Würzomat, 2 g Frischomat, 10-12 g Gewürz mit Bierhefeautolysat) pro kg Fleisch vermengt und durch eine 2 mm Scheibe gewolft. Anschließend leicht durchgemengt und in Saitlinge, Kaliber 18-20 oder 20-22 gefüllt. Danach etwa 10 Minuten Feuchtigkeit dazugegeben, 20 Minuten trocknen und 20 Minuten räuchern, 17 Minuten kochen bei 74 °C, abkühlen.

### Beispiel 12 Wurst mit Lammfleisch

Güteklasse I, ohne Fett und Sehnen, ohne Zugabe von Eis
Analyse: 2 - 3 % analytisches Fett
10 kg Lammfleisch I werden mit einer Gewürzmischung (20 g Nitritpökelsalz, g Würzomat, 2 g Frischomat, 10 bis 12 g Gewürz mit Bierhefeautolysat) pro kg Fleisch vermengt und durch eine 2 mm Scheibe gewolft. Anschließend leicht durchgemengt und in Saitlinge, Kaliber 18-20 oder 20-22 gefüllt. Danach etwa 10 Minuten Feuchtigkeit dazugegeben, 20 Minuten trocknen und 20 Minuten räuchern, 17 Minuten kochen bei 74 °C, abkühlen.

### Beispiel 13 Frischkäse mit Bierhefeautolysat

Zu einer Frischkäsezubereitung wurden 10 g/kg Frischkäsemasse der Gewürzmischung mit Bierhefeautolysat aus Beispiel 1 zugesetzt, das Gewürz vorsichtig untergehoben und die Mischung gut durchgerührt. Anschließend wurde der Frischkäse unter Kühlung gelagert.

### Beispiel 14 Kräutergeist mit Bierhefeautolysataroma

25 Wacholderbeeren, 20 g Ackergauchheil, 20 g Hauhechel, 20 g Alpenbeerentraube, 10 g getrocknete oder 20 g frische Petersilienwurzel sowie 10 g der Gewürzmischung aus Beispiel 1 werden mit 1 I Wodka vermischt. Die Mischung wird 2 Wochen lang ziehen gelassen, wobei täglich geschüttelt wird. Nach dieser Zeit wird die Flüssigkeit filtriert und abgefüllt.

### Beispiel 15 Likör mit Bierhefeautolysataroma

1 kg reife Schlehen, nach dem ersten Frost geerntet, wurden leicht angequetscht. Anschließend wurden sie mit einer Vanillestange und 10 g der Gewürzmischung aus Beispiel 1 in 1 I reinem Alkohol (90 bis 98 %) in einem großen gut schließenden Gefäß angesetzt. Die Mischung wurde 7 Wochen lang an einem schattigen Platz ziehen gelassen. Anschließend wurde sie abgeseiht, und es wurden 200 g weißer Zucker in 1 I Wasser geklärt und zu dem Schlehenmazerat gegeben. Nach zwei weiteren Tagen Ruhezeit wurde filtriert und abgefüllt.

## Patentansprüche

1. Nahrungsmittel, ausgewählt aus Fleischwaren und Käse,
**dadurch gekennzeichnet,**
**dass** es eine Gewürzmischung aus 1 bis 50 Gew.-% Bierhefeautolysat, Trockenhefe und/oder Milchhefe sowie einem oder mehreren der folgenden Bestandteile Salz, Gewürze, Gewürzextrakte, Würze, Glucose, Lactose in einer Menge enthält, die 0,1 bis 5 g Hefe pro kg Nahrungsmittel entspricht und einen Fettgehalt von weniger als 10 % aufweist.

2. Nahrungsmittel nach Anspruch 1,
**dadurch gekennzeichnet,**
**dass** es eine Fleischware mit einem Fettgehalt von weniger als 5 % ist.

3. Nahrungsmittel nach Anspruch 1 oder 2,
**dadurch gekennzeichnet,**
**dass** es eine Fleischware im Wesentlichen aus Rindfleisch mit einem Fettgehalt von weniger als 3,5 % ist.

4. Nahrungsmittel nach Anspruch 1 oder 2,
**dadurch gekennzeichnet,**
**dass** es eine Fleischware im Wesentlichen aus Schweinefleisch mit einem Fettgehalt von weniger als 2 % ist.

5. Nahrungsmittel nach einem der Ansprüche 1 bis 4,
**dadurch gekennzeichnet,**
**dass** es eine Fleischware mit einem Fettgehalt von weniger als 1 % ist.

## Claims

1. Food selected from meat products and cheese,
**characterized in that**
it contains a seasoning mixture consisting of 1 to 50 % by weight brewer's yeast autolysate, dry yeast and/or milk yeast and one or more of the following components salt, seasoning, aromatic extracts, spices, glucose and lactose in an amount which corresponds to 0.1 to 5 g yeast per kg food and has a fat content of less than 10 %.

2. Food as claimed in claim 1,
**characterized in that**
it is a meat product having a fat content of less than 5 %.

3. Food as claimed in claim 1 or 2,
**characterized in that**
it is a meat product consisting essentially of beef having a fat content of less than 3.5 %.

4. Food as claimed in claim 1 or 2,
**characterized in that**
it is a meat product consisting essentially of pork having a fat content of less than 2 %.

5. Food as claimed in one of the claims 1 to 4,
**characterized in that**
it is a meat product having a fat content of less than 1 %.

## Revendications

1. Produit alimentaire choisi à partir de denrées de boucherie ou charcuterie et de fromage, **caractérisé en ce qu'**il contient un mélange assaisonné de 1 à 50 % en poids d'autolysat de levure de bière, de levure sèche et/ou de levure de lait ainsi qu'un ou plusieurs des constituants suivants : sel, épices, extraits d'épices, condiments, glucose, lactose, dans une quantité qui correspond de 0,1 jusqu'à 5 g de levure par kg de produit alimentaire et une teneur en matières grasses inférieure à 10 %.

2. Produit alimentaire selon la revendication 1, **caractérisé en ce qu'**il s'agit d'une denrée de boucherie ou charcuterie ayant une teneur en matières grasses inférieure à 5 %.

3. Produit alimentaire selon la revendication 1 ou 2, **caractérisé en ce qu'**il s'agit d'une denrée de boucherie ou charcuterie constituée essentiellement de viande de boeuf ayant une teneur en matières grasses inférieure à 3,5 %.

4. Produit alimentaire selon la revendication 1 ou 2, **caractérisé en ce qu'**il s'agit d'une denrée de boucherie ou charcuterie constituée essentiellement de viande de porc ayant une teneur en matières grasses inférieure à 2 %.

5. Produit alimentaire selon l'une quelconque des revendications 1 à 4, **caractérisé en ce qu'**il s'agit d'une denrée de boucherie ou charcuterie ayant une teneur en matières grasses inférieure à 1 %.
